# EUROPÄISCHE PATENTSCHRIFT

(11) **EP 1 710 066 B1**
(45) Veröffentlichungstag und Bekanntmachung des Hinweises auf die Patenterteilung: **07.09.2011**
(21) Anmeldenummer: 06010652.3
(22) Anmeldetag: 12.09.2002
(51) Int. Cl.: B29B 13/02, B29B 13/06, C08G 63/80, C08G 63/90, B29B 9/16

(54) **Verfahren zur Konditionierung und Kristallisation eines polymeren Materials**
Method for conditioning and crystallizing a polymer material
Procédé de conditionement et de cristallisation d'un materiau polymère

(30) Priorität: 08.10.2001 DE 10149474
(43) Veröffentlichungstag der Anmeldung: 11.10.2006
(62) Teilanmeldung aus: 02754119.2
(73) Patentinhaber: Bühler AG, 9240 Uzwil (CH)
(72) Erfinder: Culbert, Brent Allan, 9500 Wil (CH); Christel, Andreas, 9524 Zuzwil (CH)
(74) Vertreter: Hepp Wenger Ryffel AG

(56) Entgegenhaltungen:
- WO-A-00/56510
- WO-A-99/61220
- DE-A- 3 607 412
- DE-A- 3 928 360
- DE-A- 19 500 383
- DE-A- 19 815 120
- DE-C- 19 615 937
- US-A- 4 531 308
- US-A- 5 011 648
- US-A- 5 199 184
- PATENT ABSTRACTS OF JAPAN Bd. 005, Nr. 025 (M-055), 14. Februar 1981 (1981-02-14) -& JP 55 154113 A (MATSUI SEISAKUSHO:KK), 1. Dezember 1980 (1980-12-01)

## Beschreibung

Die Erfindung bezieht sich auf ein Verfahren zur Konditionierung und Kristallisation eines zumindest teilweise amorphen, thermoplastischen polymeren Materials, das durch Verfestigen aus einer Polymerschmelze gewonnen wurde.

Das Konditionieren von Kunststoffmaterial ist bekannt. Die Dokumente US 4,531,308, DE 198 15 120 A1, US 5,011,648 und JP 55 154 113 A beschreiben jeweils eine Konditionierung von Kunststoffmaterial in Form von Granulat durch einen Trocknungsvorgang, während die Dokumente DE 196 15 937 C1 und WO 99/61220 A1 jeweils eine Konditionierung von Kunststoffmaterial in Form eines speziell geformten Artikels (Gebrauchsgegenstand aus Polyamid bzw. Preform aus Polyethylenterephthalat) beschreiben.

Polyester wie Polyethylenterephthalat, Polyethylennaphthalat, etc. werden durch Synthese in der Schmelze gewonnen. Das aus der Schmelze durch Verfestigung gewonnene feste Polyester- oder Copolyestermaterial liegt vorwiegend amorph vor und wird in nachfolgenden Prozessen wie Spritzgiessen, Extrudieren, oder Thermoformung zu Fasern oder Artikeln wie Flaschenvorformlingen (Preforms) verarbeitet, wobei die Materialeigenschaften, wie z.B. Feuchtigkeit, Molekulargewicht oder Kristallinität in dazwischenliegenden Prozessen, wie z.B. Granulation, Lagerung, Kristallisation, Trocknung oder Festphasen-Nachkondensation, oft willkürlich oder unwillkürlich rein zufällig modifiziert werden.

Um die dazwischenliegenden Prozesse besser durchführen zu können, werden aus der Schmelzesynthese gewonnene oder durch Aufschmelzen rezyklierte Polyestermaterialien zunächst in Granulatform oder auch Strangform und Bandform verfestigt. Die Überführung in die feste Form kann dabei nach dem Verfestigen des polymeren Materials, wie bei der Stranggranulation, oder aus dem noch flüssigen Zustand mit anschliessender Verfestigung erfolgen, wie bei einer Pastillization oder in einem Prillturm. Die Verfestigung kann unter Wasser oder in einem Gasmedium wie Dampf, Luft oder Stickstoff stattfinden.

Die Lagerung des Granulates findet üblicherweise in einem Silo oder in Säcken unter unkontrollierten Bedingungen statt, bei denen die Verweilzeit, die Temperatur oder die relative Feuchtigkeit zufällig sind. In dieser Zeit kann das hygroskopische Polyestermaterial je nach Umgebung unkontrolliert Feuchtigkeit aufnehmen oder auch austrocknen.

Die Trocknung und die Festphasen-Nachkondensation finden üblicherweise kontinuierlich in einem Schacht oder batchweise in einem Taumeltrockner statt. Die flüchtigen Moleküle, wie z.B. Wasser und Ethylenglykol, werden in einem Taumeltrockner durch Vakuum und in einem Schacht durch einen heissen Gasstrom dem Produkt entzogen. Die Trocknung verhindert einen Verlust an Molekulargewicht durch Hydrolyse, wenn das Material in einem Extruder wieder aufgeschmolzen wird. Die Festphasen-Nachkondensation führt zu besseren Produkteigenschaften durch eine Molekulargewichtzunahme. Die Trocknung und die Festphasen-Nachkondensation erfolgen üblicherweise oberhalb der Temperatur, bei der das Material zu kristallisieren beginnt, was einen Kristallisationsschritt zur Folge hat.

Die Kristallisation findet bei einer Temperatur über dem Glasumwandlungspunkt statt, wobei das Granulat in Bewegung gehalten werden muss, um eine Verklebung oder Zusammenbacken des Materials zu verhindern. Dies wird durch ein Medium, wie Luft, Stickstoff, Wasser oder Dampf in einem Fliessbett, durch ein mechanisches Rührwerk oder in einem Taumeltrockner durch Rotation erzielt. Bei diesen Kristallisationsprozessen werden demnach der zeitliche Verlauf der Einwirkungstemperatur und die Einwirkungsdauer bzw. die Verweilzeit der Pellets im Kristallisator eingestellt. Die Kristallisation erhöht den Klebrigkeitspunkt des Materials und verhindert ein Zusammenbacken oder eine Agglomeration des Materials in einer anschliessenden Trocknung oder Festphasen-Nachkondensation.

Das Konditionieren von Kunststoffen, wie z.B. Polyestermaterialien, ist an sich bekannt. So beschreibt z.B. die DE-196 15 937 C1 ein Verfahren zum Konditionieren von Kunststoffteilen, die Wasser aufzunehmen imstande sind, um die Sprödigkeit dieser Kunststoffteile herabzusetzen, damit sie beim Einbau in einer Maschine, wie z.B. einem Automobil, nicht beschädigt werden. Die US 4,531,308 sowie die DE-198 15 120 A1 beschreiben jeweils ein Verfahren zum Trocknen eines Polymer-Granulates, das anschliessend aufgeschmolzen und umgeformt wird. Die JP 55 154 113 A beschreibt ein Verfahren, bei dem ein amorphes Polyester-Granulat in einem Tank mit einer Rührvorrichtung und unter Beaufschlagung mit Heissluft bewegt wird, um eine Kristallisation hervorzurufen.

Es hat sich jedoch gezeigt, dass während einer solchen Kristallisation trotz sorgfältiger Temperaturführung dennoch eine Agglomeratbildung durch mehrere Pellets und/oder eine Verformung von Pellets bis hin zu einem Aufplatzen von Pellets in dem Kristallisator stattfinden kann. Solche Agglomeratbildungen und Verformungen während der Kristallisation scheinen durch unsachgemässe Bedingungen während der Granulatbildung und/oder durch eine unsachgemässe Lagerung des Granulats vor der Kristallisation begünstigt zu werden.

Der vorliegenden Erfindung liegt die Aufgabe zugrunde, derartige Agglomerationen und Verformungen von Pellets aus kristallisierbarem thermoplastischem polymeren Material während einer Kristallisation bzw. Kristallisation der Pellets zu verhindern.

Diese Aufgabe wird gemäss Anspruch 1 dadurch gelöst, dass das durch Verfestigung aus einer Polymerschmelze gewonnene, zumindest teilweise amorphe, thermoplastische polymere Material vor dem Schritt der Kristallisation und unterhalb der Kristallisationstemperatur des polymeren Materials einem oder mehreren Konditionierungsschritten unterzogen wird, in denen ein kontrollierter Feuchtigkeitsgehalt und/oder ein kontrolliertes Feuchtigkeitsprofil in dem Material eingestellt wird, wobei das polymere Material beim Verfestigen in eine Granulatform, Strangform oder Bandform überführt wird zumindest ein Schritt zur Konditionierung ein Schritt zur Befeuchtigung des polymeren Materials ist, und woraufhin das polymere Material für den Kristallisationsschritt aufgeheizt wird und die anschliessende Kristallisation des polymeren Materials in einem heissen Gasstrom erfolgt; und nach dem Schritt der Kristallisation ein Schritt zur Festphasen-Nachkondensation oft Festphasen-Polyaddition erfolgt.

Erfindungsgemäss erfolgt jeder Konditionierungsschritt in einem Medium mit einem bestimmten Wassergehalt bei einer bestimmten Temperatur über einen bestimmten Zeitraum hinweg, wobei ein Schritt zur Konditionierung bei einer Temperatur unterhalb der Kristallisationstemperatur des polymeren Materials stattfindet, woraufhin das polymere Material für den Kristallisationsschritt aufgeheizt wird. Dies ermöglicht eine gezielte Diffusion in das polymere Material hinein (Befeuchtung) oder aus ihm heraus (Trocknung).

Am Ende der Konditionierung erhält man somit eine definierte Feuchtigkeitsverteilung in dem polymeren Material.

Es ist allgemein bekannt, dass Wasser einen Nukleierungseffekt in Polyester und Polymeren im Allgemeinen verursacht, was einen Einfluss auf das Kristallisationsverhalten haben kann. Es hat sich nämlich überraschend gezeigt, dass durch die Einstellung des Feuchtigkeitsgehalts und/oder des Feuchtigkeitsprofils des Materials dessen anschliessende Kristallisation und somit Eigenschaften wie Neigung zur Verklebung oder Verformung wesentlich beeinflusst werden können. Selbst die Reaktionsgeschwindigkeit einer möglichen weiteren Festphasen-Nachkondensation kann dadurch beeinflusst werden. So entstehen z.B. in denjenigen Bereichen des polymeren Materials mit höherer Feuchtigkeit relativ rasch viele kleine Kristalle jedoch mit kleinerer Kondensationsgeschwindigkeit in einer anschliessenden Festphasen-Nachkondensation, während diejenigen Bereiche des polymeren Materials mit niedrigerer Feuchtigkeit relativ langsam wenig grosse Kristalle bilden, dafür aber mit einer grösseren Kondensationsgeschwindigkeit in einer anschliessenden Festphasen-Nachkondensation gerechnet werden kann.

Bei dem polymeren Material kann es sich um ein Polykondensat wie Polyester oder Polyamid handeln, wie z.B. Polyethylenterephthalat, Polyethylennaphthalat, Polybutylenterephthalat oder ihre Copolymere, wobei diese aus Neumaterial und/oder auch aus rezykliertem Material gewonnen worden sein können.

Vorzugsweise wird das polymere Material direkt nach dem Verfestigen in ein Medium zur Konditionierung eingebracht.

Das polymere Material kann vor der Konditionierung einen nicht-definierten Feuchtigkeitsgehalt und/oder ein nicht-definiertes Feuchtigkeitsprofil aufweisen.

Erfindungsgemäss ist zumindest ein Schritt zur Konditionierung des Materials ein Schritt zur Befeuchtung des polymeren Materials, wobei die Konditionierung insbesondere einen Schritt zur Vortrocknung aufweist. Dadurch lassen sich z.B. bei Ausgangsmaterial mit unbekanntem Feuchtigkeitsgehalt und/oder unbekannter Feuchtigkeitsverteilung weitgehend bekannte Ausgangsbedingungen für die weitere Konditionierung schaffen.

Bei einer vorteilhaften Ausführung des erfindungsgemässen Verfahrens erfolgt der Schritt der Befeuchtung während 0.5min bis 4h, vorzugsweise 2min bis 30min, unter Wasser oder im Wasserdampf unter konstanten Bedingungen bezüglich Temperatur und Druck oder während 15min bis 72h, vorzugsweise 4h bis 24h, im feuchten Gas, unter konstanten Bedingungen bezüglich Temperatur und Feuchtigkeitsmenge.

Bei einer weiteren vorteilhaften Ausführung des erfindungsgemässen Verfahrens erfolgt der Schritt der Vortrocknung während 1 min bis 72h, vorzugsweise während 30min bis 24h, im trockenen Gasstrom unter konstanten Bedingungen bezüglich Temperatur und Restfeuchtigkeitsmenge oder unter Vakuum unter konstanten Bedingungen bezüglich Temperatur und Druck.

Das polymere Material kann auch durch Verfestigen aus einer Polymerschmelze derart gewonnen worden sein, dass das polymere Material vor dem Schritt der Kristallisation ein definiertes Anfangs-Feuchtigkeitsprofil aufweist. Dies erspart eine Vorab-Trocknung oder Vorab-Befeuchtung vor der eigentlichen Konditionierung.

Insbesondere kann das definierte Anfangs-Feuchtigkeitsprofil des polymeren Materials derart verlaufen, dass die Oberfläche des polymeren Materials einen niedrigeren Wassergehalt aufweist und das Zentrum einen höheren Wassergehalt aufweist. Möglich ist auch, dass das definierte Anfangs-Feuchtigkeitsprofil des polymeren Materials derart verläuft, dass das polymere Material ein konstantes Feuchtigkeitsprofil von der Oberfläche bis zum Zentrum aufweist. Das definierte Anfangs-Feuchtigkeitsprofil des polymeren Materials kann auch derart verlaufen, dass die Oberfläche des polymeren Materials einen höheren Wassergehalt aufweist und das Zentrum einen niedrigeren Wassergehalt aufweist. Der niedrigere Wassergehalt im Zentrum kann z.B. örtlich konstant sein, wobei sich die Oberfläche mit dem höheren Wassergehalt vorzugsweise um maximal 20% der Strecke von der Oberfläche zum Zentrum in das polymere Material erstreckt. All diese Einstellungen des Feuchtigkeitsprofils erfolgen bei ausreichend hohen Konditionierungstemperaturen relativ schnell. Die so gewonnenen inhomogenen Feuchtigkeitsverteilungen können somit ungewollte Diffusionsvorgänge, insbesondere von Wassermolekülen, in dem polymeren Material während seiner Lagerung weitgehend ausgleichen. Man könnte auch sagen, die Lagerung des polymeren Materials unter bestimmten Bedingungen (Temperatur, Wassergehalt der Luft, Lagerungsdauer) wird als Teil der Konditionierung betrachtet, so dass nach der Lagerung unter definierten Bedingungen die gewünschte Feuchtigkeitsverteilung im Material vorliegt.

Erfindungsgemäss erfolgt die anschliessende Kristallisation des polymeren Materials in einem heissen Gasstrom.

Zweckmässigerweise erfolgen die Schritte zur Konditionierung kontinuierlich, wobei insbesondere nach dem Schritt der Kristallisation ein Schritt zur Trocknung, Festphasen-Nachkondensation oder Festphasen-Polyaddition erfolgt.

Weitere Vorteile, Merkmale und Anwendungsmöglichkeiten der Erfindung ergeben sich aus der folgenden Beschreibung sowie aus Beispiel 1 und 2 anhand der Zeichnungen, wobei:
- Fig. 1: eine Polarisationsmikroskop-Schnittansicht der Kristallstruktur einer Probe bei einem ersten Versuch zeigt;
- Fig. 2: eine Polarisationsmikroskop-Schnittansicht der Kristallstruktur einer Probe bei einem zweiten Versuch zeigt; und
- Fig. 3: eine Polarisationsmikroskop-Schnittansicht der Kristallstruktur einer Probe bei einem dritten Versuch zeigt.

Das erfindungsgemässe Verfahren ist z.B. ein Verfahren zum Behandeln kristallisierbarer Polymer-Materialien als Neumaterial oder als rezykliertes Material, insbesondere Poiyester-Materiaiien wie PET oder RPET, mit den folgenden Schritten: Einleiten des Polymer-Materials in einen ersten Reaktionsraum, wobei es in dem ersten Reaktionsraum zumindest vorübergehend als Schmelze vorliegt; Formen und Abkühlen des geschmolzenen Polymer-Materials zu Einheiten aus verfestigtem Polymer-Material; Einleiten des verfestigten Polymer-Materials in einen zweiten Reaktionsraum zum Einstellen des Feuchtigkeitsgehaltes und/oder der Feuchtigkeitsverteilung der Einheiten aus verfestigtem Polymer-Material; und Einleiten des Polymer-Materials in einen dritten Reaktionsraum zum Kristallisieren des verfestigten Polymer-Materials der Einheiten. Vor dem Einstellen des Feuchtigkeitsgehaltes der Einheiten aus verfestigtem Polymer-Material in dem zweiten Reaktionsraum wird z.B. dem geschmolzenen Polymer-Material in dem ersten Reaktionsraum bis auf einen bestimmten Restwassergehalt das Wasser entzogen. indem z.B. zum Einstellen des Feuchtigkeitsgehaltes und/oder der Feuchtigkeitsverteilung der Einheiten aus verfestigtem Polymer-Material die geformten und verfestigten Einheiten aus Polymer-Material in dem zweiten Reaktionsraum einem Medium mit einem bestimmten Feuchtigkeitsgehalt und einer bestimmten Temperatur für eine bestimmte Zeitdauer ausgesetzt werden. Das Entziehen von Wasser aus dem geschmolzenen Polymer-Material in dem ersten Reaktionsraum erfolgt z.B. durch Vakuum-Schmelzeentgasung. Das Medium mit dem bestimmten Feuchtigkeitsgehalt und der bestimmten Temperatur ist z.B. ein heisses Wasserbad, das z.B. unter Druck gesetzt und auf Temperaturen von mehr als 100°C gehalten wird, oder das Medium ist eine Atmosphäre mit überhitztem Wasserdampf. Als erster Reaktionsraum kommt z.B. der Prozessraum eines Polykondensationsreaktor, oder Extruders, insbesondere eines Ringextruder, in Frage. Das geschmolzene Polymer-Material am Extruderende wird z.B. zu einem oder mehreren Strängen geformt, die dann abgekühlt und verfestigt werden. Das Abkühlen und Verfestigen der Stränge beim Eintritt in den zweiten Reaktionsraum erfolgt z.B. mittels des oben genannten Mediums. Der eine oder die mehreren Stränge werden z.B. kontinuierlich durch den zweiten Reaktionsraum befördert, wobei insbesondere die Strangführung derart erfolgt, dass sie einander nicht berühren. Die Stränge werden z.B. nach ihrem Durchlaufen des zweiten Reaktionsraumes zu Pellets geschnitten, oder sie werden nach ihrem Durchlaufen des zweiten Reaktionsraumes granuliert bzw. pulverisiert. Zum Einstellen des Feuchtigkeitsgehalts der Stränge werden z.B. der Strangdurchmesser, die Temperatur des Mediums, der Feuchtigkeitsgehalt des Mediums und die Einwirkungsdauer des Mediums auf die Stränge derart gewählt, dass sich eine homogene Feuchtigkeitsverteilung über das gesamte Strangvolumen ergibt. Das geschmolzene Polymer-Material kann am Extruderende auch zu einem oder mehreren Strängen geformt und zu Pellets geschnitten werden, die dann abgekühlt und verfestigt werden, wobei auch hier das Abkühlen und Verfestigen der Pellets beim Eintritt in den zweiten Reaktionsraum mittels des Mediums erfolgt. Die Pellets werden dabei kontinuierlich durch den zweiten Reaktionsraum befördert, und zwar vorzugsweise derart, dass sie einander nicht oder nur kurzzeitig berühren. Das Medium wird dabei ständig bewegt und durchmischt. Die Pellets können durch die Bewegung des Mediums in dem Medium verwirbelt werden. Ähnlich wie bei den Strängen werden für das Einstellen des Feuchtigkeitsgehalts der Pellets die Pelletgrösse, die Temperatur des Mediums, der Feuchtigkeitsgehalt des Mediums und die Einwirkungsdauer des Mediums auf die Pellets derart gewählt, dass sich eine homogene Feuchtigkeitsverteilung über das gesamte Pelletvolumen ergibt oder dass sich eine inhomogene Feuchtigkeitsverteilung in dem Pelletvolumen ergibt. Die Einwirkungsdauer des Mediums auf die Pellets kann auch kleiner gewählt werden als die zum Erreichen einer gleichmässigen Feuchtigkeitsverteilung in den Pellets notwendige Einwirkungsdauer. Die Temperatur des Mediums und/oder der Feuchtigkeitsgehalt des Mediums werden z.B. im Verlaufe der Einwirkung des Mediums in dem zweiten Reaktionsraum derart verändert, dass sich ein mehr oder weniger stark befeuchtender Charakter oder ein mehr oder weniger stark entfeuchtender Charakter des Mediums ergibt. Insbesondere werden die Parameter Temperatur und Wassergehalt des Mediums im Verlaufe der Einwirkung derart verändert, dass das Medium zu Beginn der Einwirkung befeuchtend und gegen Ende der Einwirkung entfeuchtend wirkt, oder dass das Medium zu Beginn der Einwirkung entfeuchtend und gegen Ende der Einwirkung befeuchtend wirkt. Der Behandlungsschritt in dem zweiten Reaktionsraum kann entweder chargenweise erfolgen, wobei die Veränderung der Parameter des Mediums im Verlaufe der Einwirkung zeitlich erfolgt, oder er kann kontinuierlich erfolgen, wobei die Veränderung der Parameter des Mediums im Verlaufe der Einwirkung örtlich entlang des Weges der Pellets durch den zweiten Reaktionsraum erfolgt. Der dritte Reaktionsraum ist z.B. der Prozessraum eines Kristallisators, insbesondere eines Mehrkasten-Kristallisators. An den Schritt des Kristallisierens in dem dritten Reaktionsraum schliesst sich ein weiterer Schritt zur Festphasen-Nachkondensation und ggfs. Trocknung in einem vierten Reaktionsraum an, bei dem es sich z.B. um den Prozessraum eines Festphasen-Nachkondensationsreaktors, insbesondere eines Schachtreaktors, handeln kann.

### Beispiel 1

In einem zylindrischen Schachtreaktor von 80 mm Durchmesser wurde in drei unterschiedlichen Versuchen ca. 250g Polyethylenterephthalat-Granulat in amorphem Zustand auf einem Lochsieb eingefüllt und von einem nach unten gerichteten heissen Stickstoffstrom aufgeheizt und durchkristallisiert.

Das Granulat hat einen Durchmesser von 2 mm und eine Länge von 2.8 mm; das Schüttgewicht war 750kg/m³; der Schmelzpunkt lag bei 254°C (im DSC bei 10°C/min bestimmt); die intrinsische Viskosität (IV) war 0,64dl/g.

Vor dem Aufheizen des Granulats wurde es auf verschiedene Weisen vorbehandelt, um unterschiedliche Feuchtigkeiten und Feuchtigkeitsprofile zu erzeugen. Im ersten Versuch wurde das Granulat über eine Woche in Wasser gelegt und hatte eine gemessene Feuchtigkeit von 11 %, bevor es kristallisiert wurde. Im zweiten Versuch wurde das Granulat über 2 bis 3 Wochen in der Umgebungsluft gelassen und hatte eine Feuchtigkeit von 0,453%. Im dritten Versuch wurde das Granulat über 60 Stunden bei 60°C unter getrocknetem Stickstoff getrocknet und hatte eine Feuchtigkeit von 0,015%.

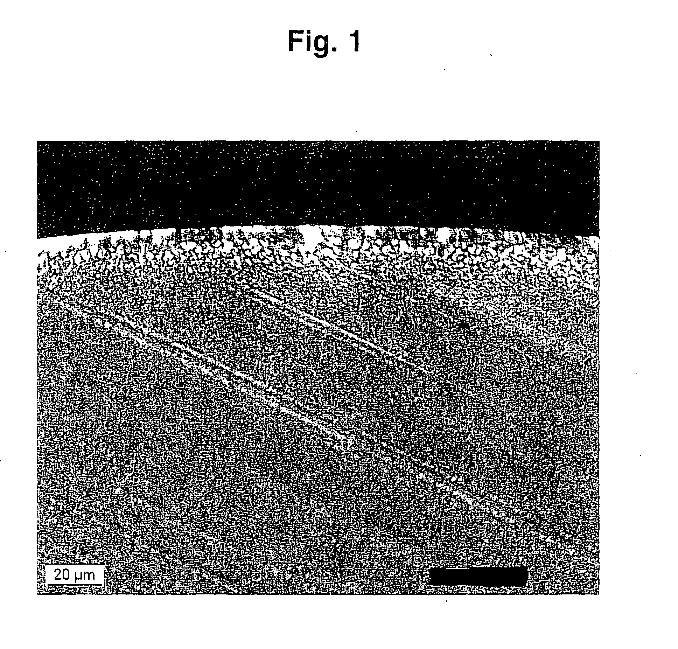

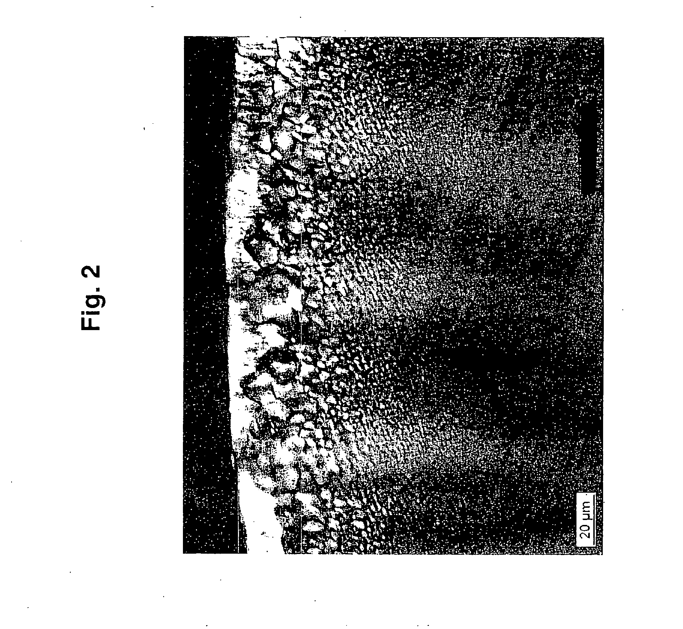

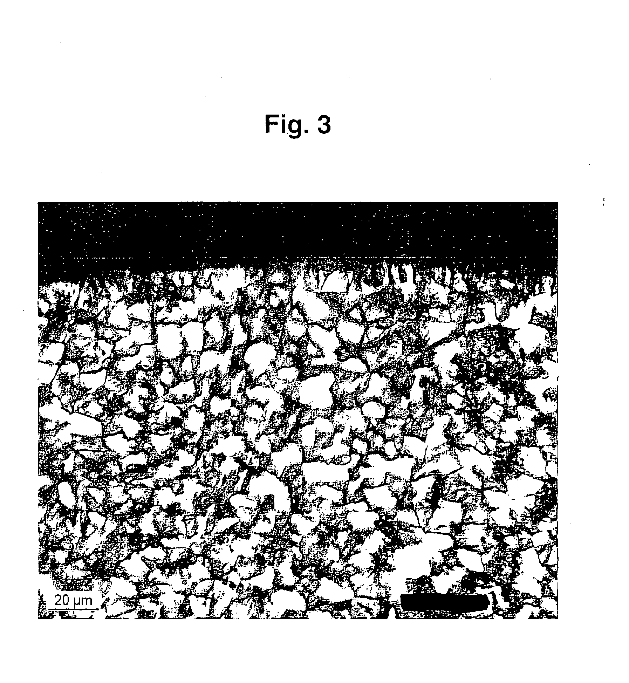

In allen drei Versuchen wurde das Granulat bei 170°C Gastemperaturen über 45 Minuten kristallisiert. Danach wurde eine Probe genommen und von einem Granulat eine Dünnschicht von 3 *µ*m vorbereitet. Die Kristallstruktur wurde unter einem Polarisationsmikroskop angeschaut. Die Probe vom ersten Versuch (Fig. 1) zeigte im Innern des Granulats eine einheitliche, aber unsichtbare, kleine Sphärolitgrösse von < 1 *µ*m. Erst am Rand ist eine dünne Schale mit Sphäroliten von< 5 *µ*m Grösse sichtbar. Die Probe vom zweiten Versuch (Fig. 2) zeigte eine ähnliche Struktur mit leicht grösseren Sphäroliten bis zu 10 µm am Rand. Die Probe vom dritten Versuch (Fig. 3) zeigte überraschenderweise eine einheitliche viel gröbere Sphärolitstruktur bis zu 20 µm quer durch das Granulat.

### Beispiel 2

Das kristallisierte Granulat von den drei Versuchen in Beispiel 1 wurde weiter auf 210°C im Schachtreaktor aufgeheizt, damit eine Festphasennachkondensation stattfand. Proben wurden nach 8 und 24 Stunden genommen, um die intrinsische Viskosität (IV) und das Schmelzverhalten im DSC bei 10°C/min zu messen.

Die Resultate sind in der unten aufgeführten Tabelle zusammengefasst. Das Granulat vom letzten Versuch mit der tiefsten Feuchte, hatte den höchsten IV-Anstieg und das tiefste Schmelzverhalten von allen drei Versuchen.

| Vorbehandlung & Feuchtigkeit | SSP-Verhalten | | Schmelzverhalten | | | |
|---|---|---|---|---|---|---|
| | IV nach 8h | IV nach 24h | Beginn (Onset) nach 24h | Spitze nach 24h | Ende nach 24h | Energie nach 24h |
| [-] | [dl/g] | [dl/g] | [°C] | [°C] | [°C] | [J/g] |
| 1 Woche in Wasser, 11 % Feuchte | 0.849 | 1.18 | 238,2 | 245,3 | 267,0 | 58,5 |
| 2-3 Wochen in Umgebungsluft, 0.453% Feuchte | 0.849 | 1.17 | 239,1 | 246,3 | 268,1 | 56,3 |
| 60 Stunden bei 60°C getrocknet, 0.015% Feuchte | 0.869 | 1.20 | 238,2 | 244,7 | 263,5 | 56,1 |

### Beispiel 3

In einem Mettler Differential Scanning Calorimeter (DSC), Typ 821 E, wurde ein Granulat vom gleichen Rohprodukt wie in Beispiel 1 gelegt und verschiedenen Vorbehandlungen unterzogen, um unterschiedliche Feuchtigkeiten und Feuchtigkeitsprofile zu erzeugen, bevor das Granulat anschliessend bei 10°C/min in dem DSC-Gerät aufgeheizt wurde, um das Kristallisationsverhalten und das Schmelzverhalten zu bestimmen.

Als Vorbehandlung wurden alle drei Granulate zuerst bei 65°C für 72 Stunden in Stickstoff im DSC-Gerät getrocknet. Im ersten Versuch wurde dann das Granulat für 10 Minuten in kochendes Wasser gelegt, damit es viel Wasser aufnehmen konnte, ohne ersichtlich zu kristallisieren. Im zweiten Versuch wurde das Granulat nur für 1 Minute in kochendes Wasser gelegt, damit es nur am Aussenrand Wasser aufnehmen konnte. Im dritten Versuch wurde das Kristallisations- und Schmelzverhalten direkt nach dem Trocknen, praktisch ohne Wasser, gemessen.

Die Resultate sind in der unteren Tabelle dargestellt. Mit sinkender Feuchtigkeit begann die Kristallisation bei immer steigender Temperatur, und die Spitze wurde zu höheren Temperaturen verschoben. Mit sinkender Feuchtigkeit wurde der Beginn, die Spitze, und das Ende des Schmelzens zu tieferen Temperaturen verschoben, sowie auch die Schmelz-Energie.

| Vorbehandlung | Kristallisationsverhalten | | | Schmelzverhalten | | | |
|---|---|---|---|---|---|---|---|
| | Beginn | Spitze | Energie Exothermie | Beginn (Onset) | Spitze | Ende | Energie Endothermie |
| [-] | [°C] | [°C] | [J/g] | [°C] | [°C] | [°C] | [J/g] |
| 72h bei 65°C & 10 Minuten in kochendes Wasser | 99 | 133,8 | 17,6 | 239,4 | 254,0 | 274,2 | 37,2 |
| 72h bei 65°C & 1 Minuten in kochendes Wasser | 111 | 142,2 | 24,1 | 241,2 | 253,3 | 268,8 | 34,7 |
| 72h bei 65°C | 135 | 150,6 | 28,4 | 238,3 | 252,9 | 267,3 | 33,5 |

## Patentansprüche

1. Verfahren zur Konditionierung eines zumindest teilweise amorphen, thermoplastischen polymeren Materiales, das durch Verfestigen aus einer Polymerschmelze gewonnen wurde, wobei das polymere Material vor dem Schritt der Kristallisation und unterhalb der Kristallisationstemperatur des polymeren Materials einem oder mehreren Konditionierungsschritten unterzogen wird, in denen ein kontrollierter Feuchtigkeitsgehalt und/oder ein kontrolliertes Feuchtigkeitsprofil in dem Material eingestellt wird,
**dadurch gekennzeichnet, dass**
das polymere Material beim Verfestigen in eine Granulatform, Strangform oder Bandform überführt wird;
zumindest ein Schritt zur Konditionierung ein Schritt zur Befeuchtung des polymeren Materials ist; und
woraufhin das polymere Material für den Kristallisationsschritt aufgeheizt wird und die anschliessende Kristallisation des polymeren Materials in einem heissen Gasstrom erfolgt; und
nach dem Schritt der Kristallisation ein Schritt zur Festphasen-Nachkondensation oder Festphasen-Polyaddition erfolgt.

2. Verfahren nach Anspruch 1, **dadurch gekennzeichnet, dass** es sich bei dem polymeren Material um ein Polykondensat wie Polyester oder Polyamid handelt.

3. Verfahren nach Anspruch 2, **dadurch gekennzeichnet, dass** es sich bei dem Polyester um ein Polyethylenterephthalat, Polyethylennaphthalat, Polybutylenterephthalat oder ihre Copolymere handelt, wobei diese aus Neumaterial und/oder auch aus rezykliertem Material gewonnen wurden.

4. Verfahren nach einem der Ansprüche 1 bis 3, **dadurch gekennzeichnet, dass** das polymere Material vor der Konditionierung einen nicht-definierten Feuchtigkeitsgehalt und/oder ein nicht-definiertes Feuchtigkeitsprofil aufweist.

5. Verfahren nach einem der vorhergehenden Ansprüche, **dadurch gekennzeichnet, dass** die Konditionierung einen Schritt zur Vortrocknung aufweist.

6. Verfahren nach Anspruch 5, **dadurch gekennzeichnet, dass** der Schritt der Vortrocknung während 0.5 min bis 4 h, vorzugsweise 2 min bis 30 min, unter Wasser oder im Wasserdampf unter konstanten Bedingungen bezüglich Temperatur und Druck erfolgt oder während 15 min bis 72 h, vorzugsweise 4 h bis 24 h, im feuchten Gas, unter konstanten Bedingungen bezüglich Temperatur und Feuchtigkeitsmenge erfolgt.

7. Verfahren nach Anspruch 4, **dadurch gekennzeichnet, dass** zumindest einer der Schritte zur Konditionierung ein Schritt zur Trocknung des polymeren Materials ist.

8. Verfahren nach Anspruch 7, **dadurch gekennzeichnet, dass** der Schritt der Vortrocknung während 1 min bis 72 h, vorzugsweise während 30 min bis 24 h, im trockenen Gasstrom unter konstanten Bedingungen bezüglich Temperatur und Restfeuchtigkeitsmenge oder unter Vakuum unter konstanten Bedingungen bezüglich Temperatur und Druck erfolgt.

9. Verfahren nach einem der vorhergehenden Ansprüche, **dadurch gekennzeichnet, dass** das polymere Material nach dem Verfestigen in eine Granulatform überführt wird.

10. Verfahren nach Anspruch 9, **dadurch gekennzeichnet, dass** das polymere Material aus dem noch flüssigen Zustand in eine Granulatform überführt wird und anschliessend verfestigt wird.

11. Verfahren nach einem der Ansprüche 1 bis 3, **dadurch gekennzeichnet, dass** das polymere Material vor dem Schritt der Kristallisation ein definiertes Anfangs-Feuchtigkeitsprofil aufweist.

12. Verfahren nach Anspruch 11, **dadurch gekennzeichnet, dass** das definierte Anfangs-Feuchtigkeitsprofil des polymeren Materials derart verläuft, dass die Oberfläche des polymeren Materials einen niedrigeren Wassergehalt aufweist und das Zentrum einen höheren Wassergehalt aufweist.

13. Verfahren nach Anspruch 11, **dadurch gekennzeichnet, dass** das definierte Anfangs-Feuchtigkeitsprofil des polymeren Materials derart verläuft, dass das polymere Material ein konstantes Feuchtigkeitsprofil von der Oberfläche bis zum Zentrum aufweist.

14. Verfahren nach Anspruch 11, **dadurch gekennzeichnet, dass** das definierte Anfangs-Feuchtigkeitsprofil des polymeren Materials derart verläuft, dass die Oberfläche des polymeren Materials einen höheren Wassergehalt aufweist und das Zentrum einen niedrigeren Wassergehalt aufweist.

15. Verfahren nach einem der vorhergehenden Ansprüche, **dadurch gekennzeichnet, dass** die Schritte zur Konditionierung kontinuierlich erfolgen.

## Claims

1. Process for conditioning an at least to some extent amorphous, thermoplastic polymeric material which has been obtained via hardening from a polymer melt, where the polymeric material is subjected, prior to the crystallization step and below the crystallization temperature of the polymeric material, to one or more conditioning steps in which a controlled moisture content and/or a controlled moisture profile is established in the material,
**characterized in that**
on hardening, the polymeric material is converted to granule form, strand form or strip form;
at least one conditioning step is a step for moistening the polymeric material; whereupon the polymeric material is heated for the crystallization step and then the crystallization of the polymeric material takes place in a hot gas stream; and
after the crystallization step, a step for solid-phase postcondensation or solid-phase polyaddition takes place.

2. Process according to Claim 1, **characterized in that** the polymeric material involves a polycondensate, such as polyester or polyamide.

3. Process according to Claim 2, **characterized in that** the polyester involves a polyethylene terephthalate, polyethylene naphthalate, polybutylene terephthalate or copolymers of these, where these have been obtained from virgin material and/or also from recycled material.

4. Process according to any of Claims 1 to 3, **characterized in that**, prior to the conditioning process, the polymeric material has an undefined moisture content and/or an undefined moisture profile.

5. Process according to any of the preceding claims, **characterized in that** the conditioning process has a predrying step.

6. Process according to Claim 5, **characterized in that** the predrying step takes place within a period of from 0.5 min to 4 h, preferably from 2 min to 30 min, under water or in water vapour under constant conditions in relation to temperature and pressure or during a period of from 15 min to 72 h, preferably from 4 h to 24 h, in the moist gas, under constant conditions in relation to temperature and amount of moisture.

7. Process according to Claim 4, **characterized in that** at least one of the conditioning steps is a step for drying the polymeric material.

8. Process according to Claim 7, **characterized in that** the predrying step takes place during the period of from 1 min to 72 h, preferably during a period of from 30 min to 24 h, in the dry gas stream under constant conditions in relation to temperature and residual amount of moisture or in vacuo under constant conditions in relation to temperature and pressure.

9. Process according to any of the preceding claims, **characterized in that** the polymeric material is converted to granule form after the hardening process.

10. Process according to Claim 9, **characterized in that** the polymeric material is converted from a state which is still liquid to granule form and is then hardened.

11. Process according to any of Claims 1 to 3, **characterized in that**, prior to the crystallization step, the polymeric material has a defined initial moisture profile.

12. Process according to Claim 11, **characterized in that** the nature of the defined initial moisture profile of the polymeric material is such that the surface of the polymeric material has a lower water content and the centre has a higher water content.

13. Process according to Claim 11, **characterized in that** the nature of the defined initial moisture profile of the polymeric material is such that the polymeric material has a constant moisture profile extending from the surface as far as the centre.

14. Process according to Claim 11, **characterized in that** the nature of the defined initial moisture profile of the polymeric material is such that the surface of the polymeric material has a higher water content and the centre has a lower water content.

15. Process according to any of the preceding claims, **characterized in that** the conditioning steps take place continuously.

## Revendications

1. Procédé pour le conditionnement d'un matériau polymère thermoplastique, au moins partiellement amorphe, qui a été obtenu par solidification à partir d'une masse fondue de polymère, le matériau polymère étant soumis, avant l'étape de cristallisation et au-dessous de la température de cristallisation du matériau polymère, à une ou plusieurs étapes de conditionnement, dans laquelle/lesquelles une teneur contrôlée en humidité et/ou un profil d'humidité contrôlé est réglé(e) dans le matériau, **caractérisé en ce que**
- le matériau polymère est transformé, lors de la solidification, en une forme de granulat, de brin ou de bande ;
- au moins une étape de conditionnement est une étape d'humidification du matériau polymère ; et
- suite à quoi le matériau polymère est chauffé, pour l'étape de cristallisation, et la cristallisation consécutive du matériau polymère a lieu dans un flux gazeux chaud ; et
- une étape de post-condensation en phase solide ou de polyaddition en phase solide a lieu après l'étape de cristallisation.

2. Procédé selon la revendication 1, **caractérisé en ce qu'**il s'agit, pour le matériau polymère, d'un produit de polycondensation, tel qu'un polyester ou un polyamide.

3. Procédé selon la revendication 2, **caractérisé en ce qu'**il s'agit, pour le polyester, d'un poly(téréphtalate d'éthylène), d'un poly(naphtalate d'éthylène), d'un poly(téréphtalate de butylène) ou de leurs copolymères, ceux-ci ayant été obtenus à partir d'un matériau nouveau et/ou également à partir d'un matériau recyclé.

4. Procédé selon l'une quelconque des revendications 1 à 3, **caractérisé en ce que** le matériau polymère présente, avant le conditionnement, une teneur en humidité non définie et/ou un profil d'humidité non défini.

5. Procédé selon l'une quelconque des revendications précédentes, **caractérisé en ce que** le conditionnement présente une étape de préséchage.

6. Procédé selon la revendication 5, **caractérisé en ce que** l'étape de préséchage a lieu pendant 0,5 min à 4 h, de préférence pendant 2 min à 30 min, sous eau ou sous de la vapeur d'eau, dans des conditions constantes de température et de pression, ou pendant 15 min à 72 h, de préférence pendant 4 h à 24 h, sous un gaz humide, dans des conditions constantes de température et de quantité d'humidité.

7. Procédé selon la revendication 4, **caractérisé en ce qu'**au moins une des étapes de conditionnement est une étape de séchage du matériau polymère.

8. Procédé selon la revendication 7, **caractérisé en ce que** l'étape de préséchage a lieu pendant 1 min à 72 h, de préférence pendant 30 min à 24 h, dans un flux gazeux sec dans des conditions constantes de température et de quantité d'humidité résiduelle ou sous vide dans des conditions constantes de température et de pression.

9. Procédé selon l'une quelconque des revendications précédentes, **caractérisé en ce que** le matériau polymère est transformé, après la solidification, en une forme de granulat.

10. Procédé selon la revendication 9, **caractérisé en ce que** le matériau polymère est transformé à partir de l'état encore liquide en une forme de granulat, puis est solidifié.

11. Procédé selon l'une quelconque des revendications 1 à 3, **caractérisé en ce que** le matériau polymère présente, avant l'étape de cristallisation, un profil d'humidité de départ défini.

12. Procédé selon la revendication 11, **caractérisé en ce que** le profil d'humidité de départ défini du matériau polymère présente une allure telle que la surface du matériau polymère présente une teneur en humidité plus faible et le centre présente une teneur en eau plus élevée.

13. Procédé selon la revendication 11, **caractérisé en ce que** le profil d'humidité de départ défini du matériau polymère se déroule de manière telle que le matériau polymère présente un profil d'humidité constant de la surface jusqu'au centre.

14. Procédé selon la revendication 11, **caractérisé en ce que** le profil d'humidité de départ défini du matériau polymère présente une allure telle que la surface du matériau polymère présente une teneur en humidité plus élevée et le centre présente une teneur en eau plus basse.

15. Procédé selon l'une quelconque des revendications précédentes, **caractérisé en ce que** les étapes de conditionnement se déroulent de manière continue.
